(19) Europäisches Patentamt
European Patent Office
Office européen des brevets

(11) Publication number: 0 590 542 A2

(12) # EUROPEAN PATENT APPLICATION

(21) Application number: 93115486.8

(22) Date of filing: 25.09.93

(51) Int. Cl.[5]: C08L 83/04, C08L 83/08, C09D 183/08

A request for correction of the description has been filed pursuant to Rule 88 EPC. A decision on the request will be taken during the proceedings before the Examining Division (Guidelines for Examination in the EPO, A-V, 2.2).

(30) Priority: 30.09.92 JP 285578/92

(43) Date of publication of application: 06.04.94 Bulletin 94/14

(84) Designated Contracting States: DE FR GB

(71) Applicant: Dow Corning Toray Silicone Co., Ltd.
3-16, Nihombashi-muromachi 2-chome
Chuo-ku, Tokyo(JP)

(72) Inventor: Kasuya, Akira, Dow Corning Toray Silicone Company, Ltd.,
2-2, Chigusa Kaigan
Ichihara-shi, Chiba Prefecture(JP)
Inventor: Mine, Katsutoshi, Dow Corning Toray
Silicone Company, Ltd.,
2-2, Chigusa Kaigan
Ichihara-shi, Chiba Prefecture(JP)
Inventor: Yamakawa, Kimio, Dow Corning Toray
Silicone Company, Ltd.,
2-2, Chigusa Kaigan
Ichihara-shi, Chiba Prefecture(JP)

(74) Representative: Sternagel, Hans-Günther, Dr. et al
Patentanwälte Dr. Michael Hann, Dr. H.-G. Sternagel, Dr. H. Dörries,
Sander Aue 30
D-51465 Bergisch Gladbach (DE)

(54) **Adhesion promoter for photocurable organosiloxane compositions.**

(57) The present invention provides adhesion promoters for photocurable organopolysiloxane compositions that permit rapid curing upon exposure to ultraviolet radiation to yield cured organosiloxane materials exhibiting an excellent initial adhesion to various types of substrates that endures during exposure to high temperatures and high humidities; this invention also provides a novel class of adhesion promoters for these compositions.

EP 0 590 542 A2

The present invention relates to adhesion promoters for use with photocurable organosiloxane compositions (POC), also referred to in this specification as a POC adhesion promoters. More specifically, the present invention relates to POC adhesion promoters that allow rapid cure upon exposure to light, particularly in the ultraviolet range, to yield cured organosiloxane materials that initially adhere tightly to a variety of substrates. This initial adhesion is not substantially affected by exposure to high temperatures and high humidities. This invention also relates to POCs that contain the present POC adhesion promoters.

POCs that cure upon exposure to light, particularly in the ultraviolet range, are widely used in industry because they are easily processed. The POCs are exemplified by compositions composed of mercaptoalkyl-containing organopolysiloxane, alkenyl-containing organopolysiloxane, and photosensitizer (Japanese Patent Publication 61-17863 [17,863/1986]), and by compositions composed of acrylamide-containing organopolysiloxane (Japanese Patent Application [Kokai] 2-294314 [294,314/1990]).

The materials obtained by curing these known compositions have poor initial adhesion to various substrates.

In response to this shortcoming, POCs have been proposed that exhibit improved initial adhesion to various substrates. These compositions are exemplified by (a) compositions composed of organopolysiloxanes containing acryl and alkoxy groups, photoinitiator, condensation catalyst, and adhesion promoter, described in Japanese Fatent Application [Kokai] 2-64161 [64,161/1990]), and (b) photocurable compositions composed of mercaptoalkyl-containing organopolysiloxane, alkenyl-containing or acrylamide-containing organopolysiloxane, alkoxy-containing silicon compound, polydiorganosiloxane, and tetraalkyl titanates, disclosed in Japanese Patent Application [Kokai] 3-128969 [128,969/1991]). However, the photocurable organopolysiloxane compositions disclosed in Japanese Patent Applications 2-64161 and 3-128969 yield cured silicone materials whose adhesiveness does not endure in the presence of high temperatures and high humidities.

The inventors achieved the present invention as the result of extensive research into the problems described above.

This invention provides an adhesion promoter for photocurable organopolysiloxane compositions, said adhesion promoter comprising

(I) 100 weight parts of an organosiloxane copolymer comprising

1 to 20 mole% $R^1{}_aR^2{}_{(1-a)}SiO_{3/2}$ units,

20 to 80 mole% $R^1{}_bR^2{}_cR^3{}_{(2-b-c)}SiO$ units, and

20 to 80 mole% $R^1{}_dR^2{}_eR^3{}_{(3-d-e)}SiO_{1/2}$ units

wherein

$R^1$ represents an alkenyl radical;

each $R^2$ is individually selected from alkyl radicals, alkoxyalkyl groups, and epoxy-containing organic groups;

$R^3$ represents and alkoxy group of one to four carbon atoms;

$\underline{a}$ is 0 or 1; $\underline{b}$ is 0 or 1 and $\underline{c}$ is 0, 1, or 2;

$\underline{b}$ + $\underline{c}$ is 1 or 2;

$\underline{d}$ is 0 or 1;

$\underline{e}$ is 0, 1, 2, or 3; and

$\underline{d}$ + $\underline{e}$ is 1, 2, or 3;

with the proviso that $R^1$ constitutes at least 2 mole% of the total silicon-bonded organic groups in the molecule and $R^3$ comprises at least 5 mole percent of the total silicon-bonded organic groups in the molecule, and

(II) 0.005 to 2000 weight parts of an organometallic compound selected from organotitanium compounds, organozirconium compounds, and organoaluminum compounds.

This invention also provides photocurable organopolysiloxane compositions comprising

A. 100 weight parts of at least one photocurable organopolysiloxane selected from the group consisting of

(1) organopolysiloxanes comprising siloxane units of the formula

$$(CH_2=\overset{R^5}{\overset{|}{C}}-\overset{O}{\overset{\|}{C}}-\overset{R^6}{\overset{|}{N}}-R^4)_x\overset{R^7_y}{\overset{|}{Si}}O_{(4-x-y)/2}\ ,$$

and
(2) combinations of
(a) an organopolysiloxane having at least 2 mercaptoalkyl radicals in each molecule, and
(b) an organopolysiloxane having at least 2 alkenyl radicals in each molecule,
where the concentration of (b) provides from 0.1 to 5 alkenyl groups in (b) per 1 mercaptoalkyl radical in (a)
and where $R^4$ represents a divalent hydrocarbon radical; $R^5$ is a hydrogen atom or a monovalent hydrocarbon radical; $R^6$ is a hydrogen atom or monovalent hydrocarbon radical; $R^7$ is selected from monovalent hydrocarbon radicals, hydroxyl groups, and alkoxy groups; $\underline{x}$ is 1, 2, or 3; $\underline{y}$ is 0, 1, or 2; and $\underline{x}$ + $\underline{y}$ is 1, 2, or 3, and
B. 100 weight parts of an adhesion-promoting composition comprising
I. 0.1 to 20 weight parts organosilicon compound comprising
1 to 20 mole% $R^1{}_aR^2{}_{(1-a)}SiO_{3/2}$ units,
20 to 80 mole% $R^1{}_bR^2{}_cR^3{}_{(2-b-c)}SiO$ units, and
20 to 80 mole% $R^1{}_dR^2{}_eR^3{}_{(3-d-e)}SiO_{1/2}$ units
where $R^1$ represents an alkeny radical,
$R^2$ is selected from alkyl radicals, alkoxyalkyl groups, and epoxy-containing organic groups,
$R^3$ represents an alkoxy group containing from 1 to 4 carbon atoms,
$\underline{a}$ is 0 or 1,
$\underline{b}$ is 0 or 1,
$\underline{c}$ is 0, 1, or 2,
$\underline{b}$ + $\underline{c}$ is 1 or 2,
$\underline{d}$ is 0 or 1,
$\underline{e}$ is 0, 1, 2, or 3, and
$\underline{d}$ + $\underline{e}$ is 1, 2, or 3,
with the provisos that $R^1$ constitutes at least 2 mole percent of the silicon-bonded organic groups in said copolymer and $R^3$ constitutes at least 5 mole percent of the silicon-bonded organic groups in said copolymer, and
(II) 0.001 to 2 weight parts of an organometallic compound selected from organotitanium compounds, organozirconium compounds, and organoaluminum compounds, and
C. a catalytic quantity of a photoinitiator.

The main ingredient of the POC adhesion promoter of the present curable organosiloxane compositions is an organosiloxane copolymer containing the following types and concentrations of repeating units:
1 to 20 mole percent of $R^1{}_aR^2{}_{(1-a)}SiO_{3/2}$ units,
20 to 80 mole percent of $R^1{}_bR^2{}_cR^3{}_{(2-b-c)}SiO$ units, and
20 to 80 mole percent of $R^1{}_dR^2{}_eR^3{}_{(3-d-e)}SiO_{1/2}$ units.

In these units $R^1$ represents an alkenyl radical, each $R^2$ is individually selected from alkyl radicals, alkoxyalkyl groups, and epoxy-containing organic groups, $R^3$ represents an alkoxy group of 1 to 4 carbon atoms, $\underline{a}$ is 0 or 1; $\underline{b}$ is 0 or 1 and $\underline{c}$ is 0, 1, or 2; $\underline{b}$ + $\underline{c}$ is 1 or 2, $\underline{d}$ is 0 or 1, $\underline{e}$ is 0, 1, 2, or 3, and $\underline{d}$ + $\underline{e}$ is 1, 2, or 3. The proviso with respect to the definitions of $\underline{a}$, $\underline{b}$, $\underline{c}$, $\underline{d}$ and $\underline{e}$ is that $R^1$ constitutes at least 2 mole percent of the total silicon-bonded organic groups in the copolymer and $R^3$ constitutes at least 5 mole percent of the silicon-bonded organic groups in the copolymer.

When $R^1$ constitutes less than 2 mole percent of the total silicon-bonded organic groups in the organosiloxane copolymer, the copolymer will bleed out from the cured elastomer composition. When $R^3$ constitutes less than 5 mole percent of the silicon-bonded organic groups present in the copolymer, the cured elastomer exhibits a substantial decline from the initial adhesion to metals.

The other required ingredient of the adhesion promoter composition is from 0.005 to 2000 weight parts of an organometallic compound that functions as a hydrolysis/ condensation catalyst for the adhesion promoter. This catalyst is an organotitanium compound, an organozirconium compound, or an organoaluminum compound.

$R^1$ in the formulae for the units of the copolymer represents an alkenyl radical. Typical alkenyl radicals that can be represented by $R^1$ include vinyl, allyl, butenyl, pentenyl, hexenyl, heptenyl, and octenyl. $R^1$ is preferably vinyl or allyl. $R^2$ in the formulae of the copolymer units is selected from alkyl radicals, alkoxyalkyl groups, and epoxy-containing organic groups. The alkyl radicals that can be represented by $R^2$ include but are not limited to such as methyl, ethyl, isopropyl, n-propyl, tert-butyl, n-butyl, pentyl, hexyl, and heptyl. The alkoxyalkyl groups that can be represented by $R^2$ include methoxyethyl, methoxypropyl, methoxyhexyl, ethoxypropyl, and ethoxyhexyl. The epoxy-containing organic groups that can be represented by $R^2$ include 2,3-epoxypropyl, 3,4-epoxybutyl, 2-glycidoxyethyl, 3-glycidoxypropyl, 4-glycidoxybutyl, 2-(3,4-epoxycyclohexyl)ethyl, and 3-(3,4-epoxycyclohexyl)propyl.

$R^3$ in the formulae of the copolymer units represents an alkoxy group of 1 to 4 carbon atoms. These groups include methoxy, ethoxy, isopropoxy, n-propoxy, tert-butoxy, and n-butoxy. $R^3$ is preferably methoxy because this group provides particularly good initial adhesion of the cured organosiloxane composition to a variety of substrates.

The method used to prepare the adhesion-promoting organosiloxane copolymer is not specifically restricted. A typical method is by an equilibration polymerization reaction involving alkenyl-containing organopolysiloxane and an organoalkoxysilane that contains alkyl, alkoxyalkyl, or epoxy-containing organic groups. The reaction is conducted in the presence of an alkali metal hydroxide such as potassium hydroxide, sodium hydroxide or lithium hydroxide. The general procedure is described in Japanese Patent Application [Kokai] 4-11634 [11,634/1992].

The organometallic compound, also referred to as ingredient II, acts in combination with the organosiloxane copolymer, ingredient I, to provide initial adhesion to a variety of substrates that will resist high temperatures and high humidities. The organometallic compound is selected from organotitanium compounds, organozirconium compounds, and organoaluminum compounds.

Organotitanium compounds suitable for use as ingredient II include tetrabutoxytitanium, tetraisopropoxytitanium, and titanium diisopropoxydi(ethyl acetoacetate). Suitable organozirconium include zirconium tetrakis(10-undecenoate), zirconium tetrakis(laurate), and zirconium tetrakis(2-ethylhexanoate). Organoaluminum compounds include trimethoxyaluminum, triethoxyaluminum, aluminum tri(acetylacetonate), and the aluminum salts of stearic acid and benzoic acid.

The present POC adhesion promoters can contain a combination of two or more species of the organometallic compounds. Tetrabutoxytitanium is a preferred ingredient II for the present POC adhesion promoters because the resulting curable organopolysiloxane composition has an excellent transparency. Zirconium tetrakis(2-ethylhexanoate) and aluminum tri(acetylacetonate) are also preferred as ingredient II because the resulting curable organopolysiloxane compositions have an excellent storage stability.

The POC adhesion promoter of the present invention must contain from 0.005 to 2,000 weight parts of ingredient II per 100 weight parts of the organosiloxane copolymer referred to as ingredient I. When less than 0.005 weight part of ingredient II is used, the cured organosiloxane product will have poor initial adhesion to various substrates. When more than 2,000 parts by weight of ingredient II are used per 100 weight parts of ingredient I, the cured organosiloxane will have poor heat resistance.

The present POC adhesion promoters invention can be added to a variety of POCs. The concentration of this adhesion promoter, a blend of ingredients I and II, is not specifically restricted. It is preferably present at a concentration of from 0.1 to 22 weight parts per 100 weight parts of the photocurable organopolysiloxane that is the main or base ingredient of the POC.

The concentration of the copolymer ingredient (I) of the POC adhesion promoter, referred to as ingredient B of the present composition, should be from 0.1 to 20 weight parts per 100 weight parts photocurable organopolysiloxane, referred to as ingredient A. When the copolymer is present at less than 0.1 weight parts per 100 weight parts of ingredient A, the cured silicone product will have a poor initial adhesion. When the copolymer concentration is greater than 20 weight parts per 100 weight parts of ingredient A, the cured silicone product will have a poor heat resistance.

The concentration of the organometallic compound referred to as ingredient II of the POC adhesion promoting composition, should be present from 0.001 to 2 weight parts per 100 weight parts of the photocurable organopolysiloxane comprising ingredient A. When ingredient II is present at less than 0.001 weight parts per 100 weight parts, based on ingredient A, the cured silicone product will have a poor initial adhesiveness. When the concentration is more than 2 weight parts per 100 weight parts ingredient A, the cured silicone product will have poor heat resistance.

There are no specific restrictions with regard to the types of POCs into which the present POC adhesion promoters can added. Suitable POCs are exemplified by organopolysiloxanes containing at least two photoreactive groups per molecule.

Photopolymerizable organopolysiloxanes suitable for use as ingredient A include alkenyl-containing organopolysiloxanes, acryl-containing organopolysiloxanes, methacryl-containing organopolysiloxanes, and acrylamide-containing organopolysiloxanes. Also suitable for use with the present adhesion-promoting compositions are POCs containing at least one mercaptoalkyl-containing organopolysiloxane and at least one alkenyl-containing organopolysiloxane, and POCs containing at least one SiH-containing organopolysiloxane and at least one alkenyl-containing organopolysiloxane.

Specific examples of useful POCs contain organopolysiloxanes with at least two of the following units per molecule:

alkenyl-containing organosiloxane units,

$CH_2 = CH(CH_3)2SiO_{1/2}$,
$(CH_2 = CH)_2 SiO_{1/2}$,
$(CH_2 = CH)_2 CH_3 SiO_{1/2}$,
$(CH_2 = CH)_3 SiO_{1/2}$,

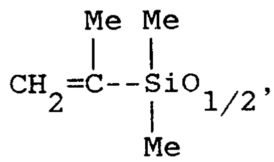

Me = methyl
$CH_2 = CHCH_2 (CH_3)_2 SiO_{1/2}$,
$CH_2 = CHCH_2 CH_2 CH_2 CH_2 (CH_3)_2 SiO_{1/2}$,
$CH_2 = CH\text{-}O\text{-}C_3 H_6 (CH_3)_2 SiO_{1/2}$ , and
$CH_2 = CHCH_2\text{-}O\text{-}C_3 H_6 (CH_3)_2 SiO_{1/2}$;
(meth)acryl-containing organopolysiloxane siloxane units

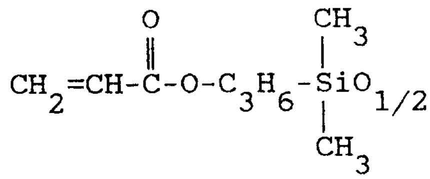,

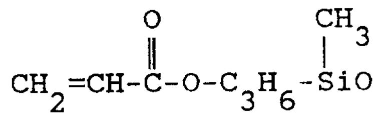,

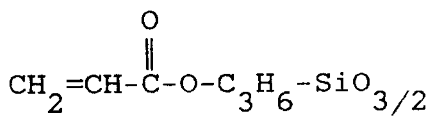,

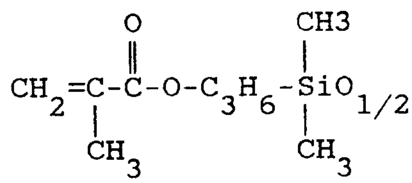,

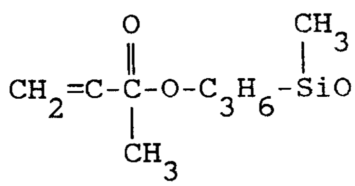,

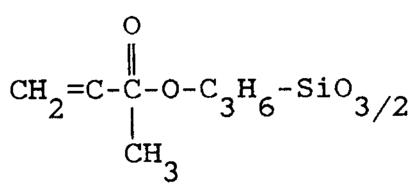;

acrylamide-containing siloxane units

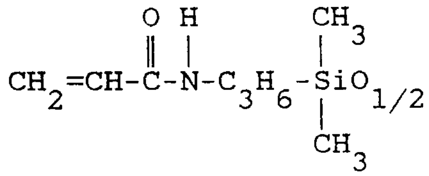,

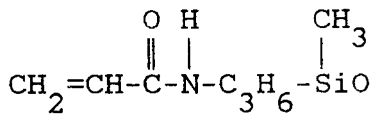,

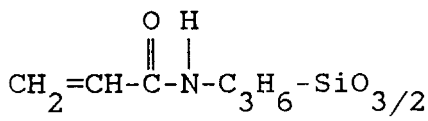,

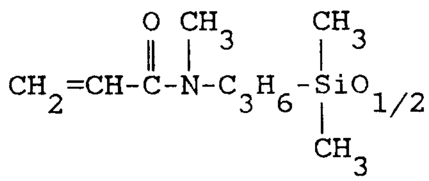,

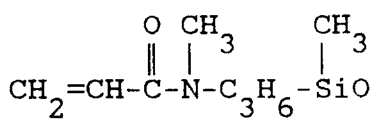,

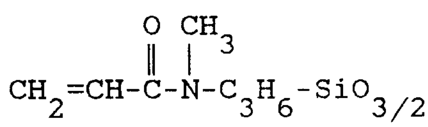,

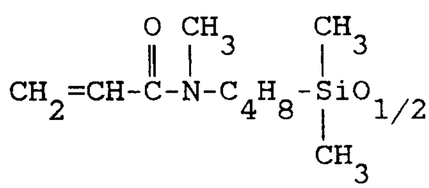,

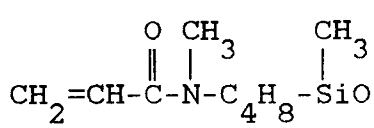,

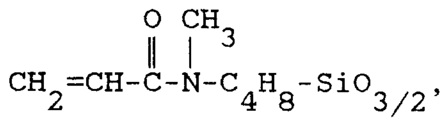,

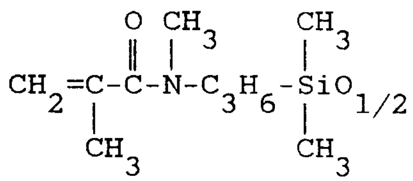,

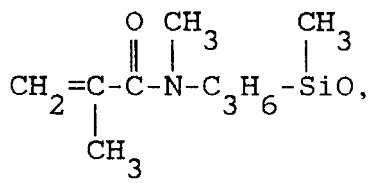, and

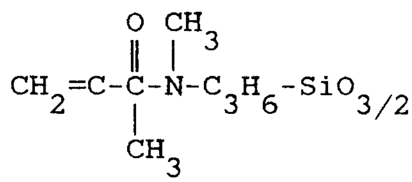

Additional examples of photocurable organosiloxane units include mercapto/vinyl-type photocurable organopolysiloxane compositions containing a mercaptoalkyl-functional organopolysiloxane and an alkenyl-functional organopolysiloxane where the alkenyl radical is exemplified by vinyl, and photocurable organopolysiloxane compositions containing an SiH-functional organopolysiloxane and alkenyl-functional organopolysiloxane.

Compositions containing acrylamide functional organopolysiloxanes and blends of a mercapto-functional organopolysiloxane with a vinyl-functional organopolysiloxane are preferred. These two classes of photocurable organopolysiloxanes are described in greater detail in the following section of this specification.

One preferred type of photocurable organopolysiloxane, referred to as ingredient A1, is represented by the general formula

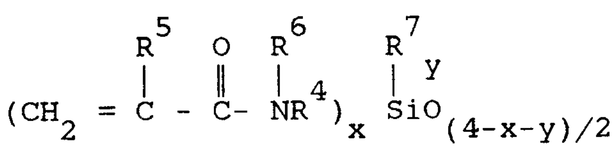

$R^4$ in this formula represents a divalent hydrocarbon radical that includes methylene, ethylene, methylethylene, ethylethylene, propylene, methylpropylene, and butylene. $R^5$ represents the hydrogen atom or a monovalent hydrocarbon radical. The monovalent hydrocarbon radicals encompassed by $R^5$ include alkyl radicals such as methyl, ethyl, propyl, and butyl; alkenyl radicals such as vinyl, allyl, butenyl, pentenyl, and hexenyl; aryl radicals such as phenyl, tolyl and xylyl; and aralkyl groups such as benzyl and phenethyl.

$R^6$ in the preceding formula represents a hydrogen atom or a monovalent hydrocarbon radical selected form the same group as $R^5$. $R^7$ can represent a monovalent hydrocarbon radical selected from the same group as $R^5$ or it can represent a hydroxyl group or an alkoxy group. The alkoxy groups encompassed by $R^7$ include methoxy, ethoxy, isopropoxy, n-propoxy, tert-butoxy, n-butoxy, and pentoxy.

In addition, $\underline{x}$ in the preceding formula is 1, 2, or 3; $\underline{y}$ is 0, 1, or 2; and $\underline{x} + \underline{y}$ is 1, 2, or 3.

The viscosity of ingredient A1 is not specifically restricted, however viscosities in the range of 10 to 100,000 mPa.s (centipoise) are preferred because such viscosity values facilitate processing of the resulting photocurable organopolysiloxane composition and impart good physical properties to the cured product.

The photocurable organopolysiloxanes that can be present as ingredient A1 include
dimethylpolysiloxanes containing the acrylamidopropyl group at both molecular chain terminals;
dimethylpolysiloxanes containing the N-methylacrylamidopropyl group at both molecular chain terminals;
dimethylpolysiloxanes containing the acrylamidoisobutyl group at both molecular chain terminals;
dimethylpolysiloxanes containing the N-methacrylamidoisobutyl group at both molecular chain terminals;
dimethylsiloxane-methylphenylsiloxane copolymers containing the acrylamidopropyl group at both molecular chain terminals;
dimethylsiloxane-methylphenylsiloxane copolymers containing the N-methylacrylamidopropyl group at both molecular chain terminals;
dimethylsiloxane-methylphenylsiloxane copolymers containing the acrylamidoisobutyl group at both molecular chain terminals;
dimethylsiloxane-methylphenylsiloxane copolymers containing the N-methylacrylamidoisobutyl group at both molecular chain terminals;
dimethylsiloxane-diphenylsiloxane copolymer containing the acrylamidopropyl group at both molecular chain terminals; dimethylsiloxane-diphenylsiloxane copolymers containing the acrylamidoisobutyl group at both molecular chain terminals;
dimethylsiloxane-methylvinylsiloxane copolymers containing the acrylamidopropyl group at both molecular chain terminals; dimethylsiloxane-methylvinylsiloxane copolymers containing the acrylamidoisobutyl group at both molecular chain terminals;
diphenylsiloxane-methylphenylsiloxane copolymers containing the acrylamidopropyl group at both molecular chain terminals; methylphenylpolysiloxanes containing the acrylamidopropyl group at both molecular chain terminals;
diphenylpolysiloxanes containing the acrylamidopropyl group at both molecular chain terminals;
dimethylpolysiloxanes containing the acrylamidopropyl group at a single molecular chain terminal;
dimethylpolysiloxanes containing the N-methylacrylamidopropyl group at a single molecular chain terminal;
dimethylpolysiloxanes containing the acrylamidoisobutyl group at a single molecular chain terminal;
dimethylpolysiloxanes containing the N-methylacrylamidoisobutyl group at a single molecular chain terminal; dimethylsiloxane-methylphenylsiloxane copolymers containing the acrylamidopropyl group at a single molecular chain terminal;
dimethylsiloxane-methylphenylsiloxane copolymers containing the acrylamidoisobutyl group at a single molecular chain terminal;
dimethylsiloxane-diphenylsiloxane copolymers containing the acrylamidopropyl group at a single molecular chain terminal; dimethylsiloxane-diphenylsiloxane copolymers containing the acrylamidoisobutyl group at a single molecular chain terminal;
dimethylsiloxane-methylvinylsiloxane copolymers containing the acrylamidopropyl group at a single molecular chain terminal;
dimethylsiloxane-methylvinylsiloxane copolymers containing the acrylamidoisobutyl group at a single molecular chain terminal;
diphenylsiloxane-methylphenylsiloxane copolymers containing the acrylamidopropyl group at a single molecular chain terminal; methylphenylpolysiloxanes containing the acrylamidopropyl group at a single molecular chain terminal;
diphenylpolysiloxanes containing the acrylamidopropyl group at a single molecular chain terminal;
dimethylpolysiloxanes containing the acrylamidopropyl group along the molecular chain in non-terminal positions; dimethylpolysiloxanes containing the N-methylacrylamidopropyl group along the molecular chain in non-terminal positions; dimethylpolysiloxanes containing the acrylamidoisobutyl group along the molecular chain in non-terminal positions;
dimethylpolysiloxane containing the N-methylacrylamidoisobutyl group along the molecular chain in non-terminal positions;
dimethylsiloxane-methylphenylsiloxane copolymers containing the acrylamidopropyl group along the molecular chain in non-terminal positions;
dimethylsiloxane-methylphenylsiloxane copolymers containing the acrylamidoisobutyl group along the molecular chain in non-terminal position;
dimethylsiloxane-methylvinylsiloxane copolymer containing the acrylamidopropyl group along the molecular chain in non-terminal positions; and
dimethylsiloxane-methylvinylsiloxane copolymer bearing the acrylamidoisobutyl group along the molecular

chain in non-terminal positions.

A second type of preferred photocurable organosiloxane material, referred to hereinafter A2, is a combination of (1) an organopolysiloxane containing at least 2 mercaptoalkyl groups in each molecule and (2) an organopolysiloxane that contains at least 2 alkenyl radicals in each molecule, ingredient (2) is present in a quantity that provides 0.1 to 5 alkenyl groups in (2) per 1 mercaptoalkyl group in ingredient (1).

The organopolysiloxane that constitutes ingredient (1) of A2 must contain at least 2 mercaptoalkyl groups in each molecule, but is not otherwise specifically restricted. Its structure may be, for example, straight chain, branched, cyclic, network, or partially branched straight chain. Examples of suitable mercaptoalkyl groups that can be present in ingredient (1) include mercaptomethyl, 2-mercaptoethyl, 3-mercaptopropyl, and 4-mercaptobutyl.

No specific restriction applies to the location of the mercaptoalkyl group within the molecule of ingredient (1), and it may be present, for example, at the molecular chain terminal(s) or along the molecular chain in non-terminal position.

The viscosity of ingredient (1) is likewise not specifically restricted, however viscosities in the range of 10 to 1,000,000 centistokes ($0.01 \times 10^{-3}$ to $1000 \times 10^{-3}$ $m^2$/sec) are preferred because such viscosities facilitate processing of the resulting photocurable organopolysiloxane composition and yield good physical properties in the cured silicone product.

The silicon-bonded organic groups in ingredient (1) other than mercaptoalkyl comprise monovalent hydrocarbon radicals other than alkenyl radicals, but are not otherwise specifically restricted. Examples of suitable hydrocarbon radicals include alkyl radicals such as methyl, ethyl, isopropyl, n-propyl, tert-butyl, n-butyl and pentyl; aryl radicals such as phenyl, tolyl and xylyl; and aralkyl groups such as benzyl and phenethyl.

Specific types of organopolysiloxanes that can be present as ingredient (1) of A2 include
dimethylpolysiloxanes containing a
dimethyl(3-mercaptopropyl)siloxy group at both molecular chain terminals;
dimethylsiloxane-methylphenylsiloxane copolymers containing a dimethyl(3-mercaptopropyl)siloxy group at both molecular chain terminals;
dimethylsiloxane-diphenylsiloxane copolymers containing a dimethyl(3-mercaptopropyl)siloxy group at both molecular chain terminals;
methyl(3-mercaptopropyl)siloxane-dimethylsiloxane copolymers
methyl(3-mercaptopropyl)siloxane-methylphenylsiloxane copolymers;
methyl(3-mercaptopropyl)siloxane-diphenylsiloxane copolymers;
3-mercaptopropyl(phenyl)siloxane-dimethylsiloxane copolymers; and
3-mercaptopropyl(phenyl)siloxane-diphenylsiloxane copolymers.

The organopolysiloxane referred to as ingredient (2) of A2 must contain at least 2 alkenyl radicals in each molecule, but is not otherwise specifically restricted. Its structure may be, for example, straight chain, branched, cyclic, network, or partially branched straight chain.

Examples of suitable alkenyl radical that can be present in ingredient (2) include vinyl, allyl, butenyl, pentenyl, hexenyl, and heptenyl. The location of the alkenyl radical in the molecule of ingredient (2) is not specifically restricted, and it may be bonded, for example, at the molecular chain terminal(s) or along the molecular chain in non-terminal position.

The viscosity of ingredient (2) is also not specifically restricted, however viscosities in the range of 10 to 1,000,000 $mm^2$/s (centistokes) are preferred because such viscosities facilitate processing of the resulting curable organopolysiloxane composition and impart good physical properties to the cured product.

The silicon-bonded organic groups other than alkenyl radicals that can be present in ingredient (2) are monovalent hydrocarbon radicals that include alkyl radicals such as methyl, ethyl, isopropyl, n-propyl, tert-butyl, n-butyl, and pentyl; aryl radicals phenyl, tolyl and xylyl; and aralkyl radicals such as benzyl and phenethyl.

Specific examples of ingredient (2) of A2 are
dimethylpolysiloxanes containing the
dimethylvinylsiloxy group at both molecular chain terminals;
dimethylsiloxane-methylphenylsiloxane copolymers containing the dimethylvinylsiloxy group at both molecular chain terminals;
dimethylsiloxane-diphenylsiloxane copolymers containing the dimethylvinylsiloxy group at both molecular chain terminals;
dimethylsiloxane-methylvinylsiloxane copolymers containing the dimethylvinylsiloxy group at both molecular chain terminals;
dimethylsiloxane-phenylvinylsiloxane copolymers containing the dimethylvinylsiloxy group at both molecular

chain terminals;
methylvinylpolysiloxanes containing the dimethylvinylsiloxy group at both molecular chain terminals;
methylvinylsiloxane-dimethylsiloxane copolymers;
methylvinylsiloxane-methylphenylsiloxane copolymers;
methylvinylsiloxane-diphenylsiloxane copolymers;
phenylvinylsiloxane-dimethylsiloxane copolymers; and
phenylvinylsiloxane-diphenylsiloxane copolymers.

Ingredient (2) of A2 should be present in a quantity that provides 0.1 to 5 alkenyl groups per mercaptoalkyl group in ingredient (1) of A2.

Curing of the resulting POC will be inadequate when ingredient (2) is present either in a quantity that provides less than 0.1 or more than 5 alkenyl groups per mercaptoalkyl group in ingredient (1).

The photoinitiator comprising ingredient C of the present photocurable organosiloxane compositions accelerates curing of the photocurable organosiloxane materials referred to as ingredients A1 and A2. Ingredient C includes those photoinitiators in general use, and no specific restrictions otherwise apply to this ingredient. Suitable photoinitiators include: benzoin and its derivatives such as benzoin, benzoin methyl ether, benzoin ethyl ether, benzoin isopropyl ether, benzoin n-propyl ether, benzoin isobutyl ether, and benzoin n-butyl ether;
acetophenone and its derivatives such as, dichloroacetophenone, trichloroacetophenone, tert-butyltrichloroacetophenone, 2,2-diethoxyacetophenone and p-dimethylaminoacetophenone;
benzophenone and its derivatives such as, 2-chlorobenzophenone, p,p'-dichlorobenzophenone, and p,p'-bis-(diethylamino)benzophenone; and
p-dimethylaminopropiophenone, Michler's ketone, benzil, benzil dimethyl ketal, tetramethylthiuram monosulfide, thioxanthone, 2-chlorothioxanthone, 2-methylthioxanthone, azoisobutyronitrile, benzoin peroxide, di-tert-butyl peroxide, 1-hydroxycyclohexyl phenyl ketone, 2-hydroxy-2-methyl-1-phenyl-1-one, 1-(4-isopropylphenyl)-2-hydroxy-2-methylpropan-1-one, methyl benzoylformate, diphenyl sulfide, anthracene, 1-chloroanthraquinone, diphenyl disulfide, diacetyl, hexachlorobutadiene, pentachlorobutadiene, octachlorobutadiene, and 1-chloromethylnaphthalene.

Ingredient C should be present in a catalytic quantity sufficient to initiate curing of the present compositions. It is sufficient to add the photoinitiator in ordinary or typical quantities. This ingredient preferably constitutes from 0.1 to 10 percent of the total weight of the POC. When the concentration of this ingredient is below 0.1 weight percent the curability of the resulting POC will be diminished. At catalyst concentrations greater than 10 weight percent, the cured silicone product will exhibit a diminished heat resistance.

The present photocurable organosiloxane compositions are prepared by blending B and C to homogeneity with either of A1 or A2.

One of the additional ingredients that can be present in the photocurable compositions of this invention is one or more photosensitizers. Operable photosensitizers are specifically exemplified by n-butylamine, di-n-butylamine, tri-n-butylphosphine, allylthiourea, S-benzylisothiuronium p-toluenesulfonate, triethylamine, and diethylaminoethyl methacrylate. Through their use, in combination with the photoinitiator, (ingredient C), these photosensitizers accelerate the curing reaction of ingredients A1 and A2.

The curable organosiloxane composition of the present invention can also contain one or more of the following optional additional ingredients; inorganic fillers such as fumed silica and quartz powder; electrically or thermally conductive fillers such as metal compounds; dyes and pigments for the purpose of adjusting or selecting the color or light wavelength; and organic solvents that include aliphatic solvents such as hexane and heptane; aromatic solvents such as toluene and xylene; and halogenated hydrocarbon solvents such as chlorothene, and fluorinated solvents.

The photocurable organopolysiloxane compositions of the present invention cure rapidly when irradiated with light such as ultraviolet light. The resulting cured silicone has an excellent initial adhesion to a variety of substrates, and this adhesion is not diminished when exposed to high temperatures and high humidities. As a result, the present compositions offer an excellent workability because the heretofore used primer treatments may be omitted.

Because the present photocurable organosiloxane compositions adhere well to a variety of substrates, they can be used as coatings for electrical and electronic components, as lens coatings, as glass coloring agents, as adhesives, and for a variety of other uses.

## Examples

The following examples describe preferred embodiments of the present invention. Unless otherwise specified in the examples all parts and percentages are by weight and viscosities were measured at 25 °C.

The wavelength of the light used to initiate curing of the photocurable organopolysiloxane compositions in the examples was measured using an actinometer having a maximum sensitivity at 365 nm. The adherence and the durability of the adhesion were evaluated as described below.

### Initial Adhesion

Glass plates, aluminum plates, and glass-reinforced epoxy plates were each coated with the particular POC, and curing was then initiated by irradiation with the light from a high-pressure mercury lamp. The adhesion of the cured silicone was evaluated immediately after curing using the following scale.

+ + = strong adhesion
+ = partial delamination despite strong adhesion
x = complete delamination

### Durability of Adhesion

Glass plates, aluminum plates, and glass-reinforced epoxy plates were each coated with the particular POC, and curing was then effected by irradiation with the light from a high-pressure mercury lamp. The specimens were subsequently held for 24 hours in a 121 °C/RH 100% atmosphere, and the durability of the adherence was then immediately evaluated. The adhesion was evaluated using the following scale.

+ + = strong adhesion
+ = partial delamination despite strong adhesion
x = complete delamination

### Reference Example 1

70 weight parts of tetramethyltetravinylcyclotetrasiloxane, 100 weight parts methyltrimethoxysilane, and 0.14 weight parts potassium hydroxide were introduced into a four-neck flask equipped with a stirrer, thermometer, and reflux condenser and heated while stirring. After being heated for 3 hours at 120 °C to polymerize these reactants, the reaction mixture was neutralized using dimethyldichlorosilane. The low boiling components were then removed by vacuum distillation at 100 °C under a pressure of 665 Pa (5 mm Hg). Fourier transform nuclear magnetic resonance analysis of the resulting product confirmed it to be an organosilicon compound with the types and concentrations of repeating units reported in Table 1.

Table 1

| Structural Formula | mole% |
|---|---|
| $(CH_3O)(CH_3)CH_2=CHSiO_{1/2}$ | 14.4 |
| $(CH_3)CH_2=CHSiO$ | 6.1 |
| $(CH_3O)_2CH_3SiO_{1/2}$ | 39.4 |
| $(CH_3O)CH_3SiO$ | 35.6 |
| $CH_3SiO_{3/2}$ | 4.5 |

### Reference Example 2

100 parts of a hydroxyl-terminated methylvinylpoly-siloxane with an average molecular weight of 700), 140 parts 3-methoxypropyltrimethoxysilane, and 0.14 weight parts potassium hydroxide were introduced into a four-neck flask equipped with a stirrer, thermometer, and reflux condenser and heated while stirring. After being reacted for 3 hours at 120 °C, the resultant reaction mixture was neutralized using dimethyldichlorosilane. The low boiling materials were then removed by vacuum distillation at 110 °C and 665 Pa (5 mm Hg).

Fourier transform nuclear magnetic resonance analysis of the resulting product confirmed it to be an organosilicon compound with the structural formulas reported in Table 2.

Table 2

| Unit Structural Formula | Mol Percent |
|---|---|
| $(CH_3O)(CH_3)CH_2=CHSiO_{1/2}$ | 21.8 |
| $(CH_3)CH_2=CHSiO$ | 21.8 |
| $(CH_3O)_2CH_3OC_3H_6SiO_{1/2}$ | 12.7 |
| $(CH_3O)CH_3OC_3H_6SiO$ | 26.4 |
| $CH_3OC_3H_6SiO_{3/2}$ | 17.3 |

Example 1

100 weight parts dimethylpolysiloxane exhibiting a viscosity of 3,000 mPa.s (centipoise) and terminated at both ends of the molecule with the group

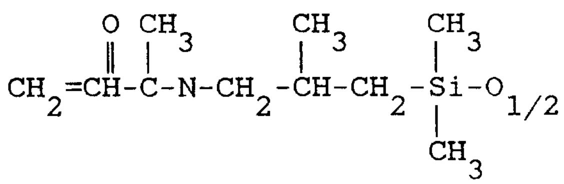 ,

5 weight parts of the organosilicon compound synthesized in Reference Example 1, 0.1 weight parts tetrabutoxytitanium, and 1 weight part 2-hydroxy-2-methyl-1-phenylpropan-1-one were thoroughly mixed to yield a POC (I) in accordance with the present invention.

This POC (I) was cured by exposure to a light dosage of 3 J/cm$^2$, and the initial adhesion and durability of the adhesion following exposure to high temperature and high humidity were evaluated. The results are reported in Table 3.

Comparison Example 1

A photocurable organopolysiloxane composition was prepared as described in Example 1, but in this case omitting the organosilicon compound synthesized in Reference Example 1 from the POC (I) of Example 1. This comparison composition was cured by the same method as above, and the initial adhesion and durability of the adhesion following exposure to high temperature and high humidity were evaluated. The results are reported in Table 3.

Comparison Example 2

A POC was prepared as described in Example 1, but in this case omitting the tetrabutoxytitanium from the POC (I) of Example 1. This comparison composition was cured by the same method as above, and the initial adhesion and durability of the adhesion following exposure to high temperature and high humidity were evaluated. The results are reported in Table 3.

Table 3

| | present invention | comparison examples | |
|---|---|---|---|
| | Example 1 | Comparison Example 1 | Comparison Example 2 |
| initial adhesion | | | |
| glass plate | + + | x | x |
| aluminum plate | + + | x | x |
| glass-containing epoxy plate | + + | x | x |
| adhesion durability | | | |
| glass plate | + + | x | + |
| aluminum plate | + + | x | + |
| glass-reinforced epoxy plate | + + | x | + |

Example 2

100 weight parts of a dimethylpolysiloxane exhibiting a viscosity of 3,000 mPa.s (centipoise) and terminated molecular ends with the group

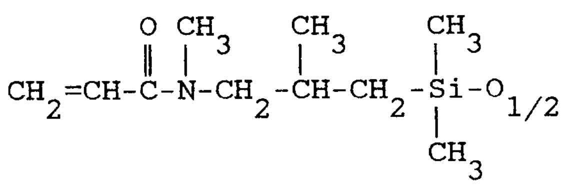

5 weight parts of the organosilicon compound synthesized in Reference Example 2, 2 weight parts of a 10 weight% hexane solution of zirconium tetrakis(2-ethylhexanoate), and 1 weight part 2-hydroxy-2-methyl-1-phenylpropan-1-one were thoroughly mixed to yield a POC (II) in accordance with the present invention.

This POC (II) was cured as in described in Example 1, and the initial adhesion and durability of the adhesion following exposure to high temperature and high humidity were evaluated. The results are reported in Table 4.

Example 3

The following ingredients were thoroughly mixed: 100 weight parts of a dimethylpolysiloxane terminated with dimethyl-vinylsiloxy groups and exhibiting a viscosity 2,000 mPa.s (centipoise), 5 weight parts of the organosilicon compound as synthesized in Reference Example 1, 0.1 weight parts tetrabutoxytitanium, and 1 weight part 1-(4-isopropylphenyl)-2-hydroxy-2-methylpropan-1-one. Into the resulting mixture was then thoroughly mixed 30 weight parts of a trimethylsiloxy-terminated poly(dimethyl)(methyl, 3-mercaptopropyl)-siloxane exhibiting a viscosity of 100 mPa.s (centipoise) and containing an average of five 3-mercaptopropyl groups per molecule along the molecular chain in non-terminal positions. The resulting mixture of the present invention was designated as POC III.

This POC (III) was cured by exposure to a light dosage of 0.5 $J/cm^2$. The initial adhesion and the durability of the adhesion following exposure to high temperature and high humidity were evaluated, and these results are reported in Table 4.

Table 4

| | Present Invention Example 2 | Example 3 |
|---|---|---|
| initial adhesion | | |
| glass plate | + + | + + |
| aluminum plate | + + | + + |
| glass-reinforced epoxy plate | + + | + + |
| adhesion durability | | |
| glass plate | + + | + + |
| aluminum plate | + + | + + |
| glass-containing epoxy plate | + + | + + |

The POC adhesion promoter in accordance with the present invention is characterized by its ability to impart initial adhesion to a variety of substrates, and an adhesion that endures following exposure to high temperatures and high humidity to the cured silicone products prepared using POCs that contain said these adhesion promoters. Moreover, the present POCs are characterized by a rapid cure upon exposure to ultraviolet and other wavelengths of light to yield cured silicone products that have excellent initial and long term adhesion.

## Claims

**1.** An adhesion promoter for photocurable organopolysiloxane compositions that comprises
(I) 100 weight parts of an organosiloxane copolymer comprising
1 to 20 mole percent of $R^1{}_aR^2{}_{(1-a)}SiO_{3/2}$ units,
20 to 80 mole percent of $R^1{}_bR^2{}_cR^3{}_{(2-b-c)}SiO$ units, and
20 to 80 mole percent of $R^1{}_dR^2{}_eR^3{}_{(3-d-e)}SiO_{1/2}$ units
wherein
$R^1$ represents an alkenyl radical,
each $R^2$ is individually selected from alkyl radicals, alkoxyalkyl groups, and epoxy-containing organic groups bonded to silicon through carbon,
$R^3$ represents an alkoxy group of one to four carbon atoms,
$\underline{a}$ is 0 or 1; $\underline{b}$ is 0 or 1 and $\underline{c}$ is 0, 1, or 2;
$\underline{b}$ + $\underline{c}$ is 1 or 2,
$\underline{d}$ is 0 or 1,
$\underline{e}$ is 0, 1, 2, or 3, and
$\underline{d}$ + $\underline{e}$ is 1, 2, or 3,
with the proviso that $R^1$ constitutes at least 2 mole percent of the total silicon-bonded organic groups in the molecule and $R^3$ comprises at least 5 mole percent of the total silicon-bonded organic groups in the molecule, and
(II) 0.005 to 2000 parts by weight of an organometallic compound selected from organotitanium compounds, organozirconium compounds, and organoaluminum compounds.

**2.** An adhesion promoter according to claim 1 where
$R^1$ represents a vinyl or allyl radical,
$R^2$ represent methyl or 3-methoxy propyl,
$R^3$ represents an methoxy group, and
said organometallic compound is selected from tetrabutoxytitanium, tetraisopropoxy-titanium, titanium diisopropoxydi(ethyl acetoacetate), zirconium tetrakis(10-undecenoate), zirconium tetrakis-(laurate), zirconium tetrakis(2-ethylhexanoate), trimethoxyaluminum, triethoxyaluminum, aluminum tri-(acetylacetonate), and the aluminum salts of stearic acid and benzoic acid; and the viscosity of said copolymer is from 0.1 x $10^{-3}$ to 1000 x $10^{-3}$ $m^2$/sec.

**3.** A photocurable organopolysiloxane composition comprising

A. 100 weight parts of at least one photocurable organopolysiloxane selected from the group consisting of

(1) organopolysiloxanes comprising siloxane units of the formula

$$(CH_2 = \overset{R^5}{\overset{|}{C}} - \overset{O}{\overset{\|}{C}} - \overset{R^6}{\overset{|}{N}} - R^4)_x \overset{R^7_y}{\overset{|}{Si}}O_{(4-x-y)/2} ,$$

and

(2) combinations of

(a) an organopolysiloxane having at least 2 mercaptoalkyl radicals in each molecule, and

(b) an organopolysiloxane having at least 2 alkenyl radicals in each molecule,

where the concentration of (b) provides from 0.1 to 5 alkenyl groups in (b) per 1 mercaptoalkyl radical in (a)

and where $R^4$ represents a divalent hydrocarbon radical; $R^5$ is a hydrogen atom or a monovalent hydrocarbon radical; $R^6$ is a hydrogen atom or monovalent hydrocarbon radical; $R^7$ is selected from monovalent hydrocarbon radicals, hydroxyl groups, and alkoxy groups; $\underline{x}$ is 1, 2, or 3; $\underline{y}$ is 0, 1, or 2; and $\underline{x} + \underline{y}$ is 1, 2, or 3, and

B. 100 weight parts of an adhesion promoting composition comprising

(1) an organosiloxane copolymer

comprising

1 to 20 mole percent of $R^1{}_aR^2{}_{(1-a)}SiO_{3/2}$ units,

20 to 80 mole percent of $R^1{}_bR^2{}_cR^3{}_{(2-b-c)}SiO$ units, and

20 to 80 mole percent of $R^1{}_dR^2{}_eR^3{}_{(3-d-e)}SiO_{1/2}$ units

where

$R^1$ represents an alkenyl radical,

each $R^2$ is individually selected from alkyl radicals, alkoxyalkyl groups, and epoxy-containing organic groups bonded to silicon through carbon,

$R^3$ represents an alkoxy group of 1 to 4 carbon atoms,

$\underline{a}$ is 0 or 1; $\underline{b}$ is 0 or 1 and $\underline{c}$ is 0, 1, or 2;

$\underline{b} + \underline{c}$ is 1 or 2,

$\underline{d}$ is 0 or 1,

$\underline{e}$ is 0, 1, 2, or 3, and

$\underline{d} + \underline{e}$ is 1, 2, or 3,

with the proviso that $R^1$ constitutes at least 2 mole percent of the total silicon-bonded organic groups in said copolymer and $R^3$ comprises at least 5 mole percent of the total silicon-bonded organic groups in said copolymer, and

(2) 0.001 to 2 weight parts of an organometallic compound selected from the group comprising organotitanium compounds, organozirconium compounds, and organoaluminum compounds, and

C. a catalytic quantity of a photoinitiator.

**4.** A composition according to claim 3 where
$R^1$ represents a vinyl or allyl radical,
$R^2$ represent methyl or 3-methoxy propyl,
$R^3$ represents an methoxy group, and
said organometallic compound is selected from tetrabutoxytitanium, tetraisopropoxy-titanium, titanium diisopropoxydi(ethyl acetoacetate), zirconium tetrakis(10-undecenoate), zirconium tetrakis(laurate), zirconium tetrakis-(2-ethylhexanoate), trimethoxyaluminum, triethoxyaluminum, aluminum tri-(acetylacetonate), and the aluminum salts of stearic acid and benzoic acid; and the viscosity of said copolymer is from 0.1 x $10^{-3}$ to 1000 x $10^{-3}$ $m^2$/sec.

**5.** A composition according to claim 3 where the concentration of said copolymer is from 0.1 to 20 weight percent, based on the weight of said photocurable organosiloxane compounds.

6. A composition according to claim 5 where $R^4$ is propylene or butylene, $R^5$ and $R^6$ are, individually, hydrogen or methyl, $R^7$ is methyl and y is 2.

7. A composition according to claim 5 where said mercaptoalkyl radical in organopolysiloxane (2)(a) is 3-mercaptopropyl, the alkenyl radical in organopolysiloxane (2)(b) is vinyl, organopolysiloxanes (2)(a) and (2)(b) are dimethylpolysiloxanes, and the concentration of (2)(b) provides from 0.1 to 5 alkenyl radicals per mercaptoalkyl radical in (2)(a).